# EUROPÄISCHE PATENTSCHRIFT

(11) **EP 4 126 645 B1**
(45) Veröffentlichungstag und Bekanntmachung des Hinweises auf die Patenterteilung: **07.01.2026**
(21) Anmeldenummer: 21705505.2
(22) Anmeldetag: 15.02.2021
(51) Int. Cl.: B62J 17/04

(54) **ABNEHMBARE WINDSCHILDANORDNUNG FÜR EIN NEIGEFAHRZEUG**
REMOVABLE WINDSCREEN ARRANGEMENT FOR A TILTING VEHICLE
AGENCEMENT DE PARE-BRISE AMOVIBLE POUR VÉHICULE INCLINABLE

(30) Priorität: 02.04.2020 DE 102020109198
(43) Veröffentlichungstag der Anmeldung: 08.02.2023
(73) Patentinhaber: Bayerische Motoren Werke Aktiengesellschaft, 80809 München (DE)
(72) Erfinder: WASSER, Jens, 85737 Ismaning (DE); ENGL, Richard, 80935 München (DE)
(86) Internationale Anmeldenummer: PCT/EP2021/053574
(87) Internationale Veröffentlichungsnummer: WO 2021/197702

(56) Entgegenhaltungen:
- WO-A1-2016/009349
- GB-A- 827 330
- US-A- 5 732 965
- US-A- 5 853 217

## Beschreibung

Die Erfindung betrifft eine Windschildanordnung zur Befestigung an einem Fahrzeug, insbesondere an einem Neigefahrzeug, sowie ein Fahrzeug mit einer entsprechenden Windschildanordnung.

Windschilder kommen insbesondere für Motorräder, aber auch für andere Fahrzeuge, in unterschiedlichsten Ausführungsformen zum Einsatz. Üblicherweise werden diese fest am Fahrzeug befestigt und können statisch oder verstellbar ausgebildet sein. Je nach aktuellem Bedarf ermöglichen die verstellbaren Windschildanordnungen mit Hilfe von teils sehr unterschiedlich gestalteten Verstellvorrichtungen eine Variation in Position und Wirkung vorzunehmen.

Aus der DE 102 30 915 A1 ist beispielsweise ein verstellbares Windschild bekannt, welches zwischen einer oberen und unteren Position bewegbar ist, wobei die untere Position eine besondere Geländetauglichkeit ermöglicht.

Die US 5,853,217 A betrifft eine Windschildanordnung für ein Motorrad, welches zur Anordnung an einem Motorrad unterschiedlich orientierte Aufnahmen aufweist.

Die WO 2016/009349 A1, die den Oberbegriff von Anspruch 1 offenbart, betrifft eine Sicherheitsanordnung für eine Windschutzscheibe mit einer Windschutzscheibenplatte, einem Tragarm zum Tragen der Windschutzscheibenplatte, wobei der Tragarm ein erstes Teil des Arms umfasst, das konfiguriert ist, an einem Motorroller angebracht zu werden, und ein zweites Teil des Arms, das an der Windschutzscheibenplatte angebracht ist. Mindestens ein Verbindungselement ist vorgesehen, um das zweite Teil des Arms drehbar mit dem ersten Teil des Arms zu verbinden, sodass das zweite Teil des Arms zum Drehen um eine Rotationsachse aus einer ersten Winkelstellung in eine zweite Winkelstellung in einer ersten Richtung und aus einer zweiten Winkelstellung in die erste Winkelstellung in einer zweiten Richtung entgegen der ersten Richtung geeignet ist, wobei die erste und die zweite Winkelstellung voneinander verschiedene Stellungen sind. Ferner ist ein Blockierelement vorgesehen, das bereitgestellt ist, um den zweiten Teil des Arms in der ersten Winkelstellung auf lösbare Weise zu blockieren etc.

Die US 5 732 965 A betrifft ein Positioniersystem für ein Windschild für Motorräder.

Die GB 827 330 A betrifft ein Windschild für ein Motorrad oder einen Roller, welches drehbar ist.

Bekannten Windschildanordnungen, ob statisch oder verstellbar, ist gemein, dass diese in jedem Fahrzustand sicher und solide am Fahrzeug befestigt sein müssen. Entsprechend benötigt eine Montage und Demontage einen gewissen Aufwand und zusätzliches Werkzeug.

Es ist daher eine Aufgabe der Erfindung eine Windschildanordnung zur Befestigung an einem Fahrzeug bereitzustellen, welche eine möglichst einfache Montage und Demontage ermöglicht.

Diese Aufgabe wird gelöst mit einer Windschildanordnung gemäß dem Gegenstand des Patentanspruchs 1, sowie einem Fahrzeug mit den Merkmalen des Patentanspruchs 2. Vorteilhafte Ausführungsformen ergeben sich aus den jeweils abhängigen Patentansprüchen.

Erfindungsgemäß wird eine Windschildanordnung zur Befestigung an einem Fahrzeug, insbesondere einem Neigefahrzeug, vorgeschlagen, mit einem Windschild zum (zumindest teilweisen) Abweisen eines Fahrtwindes bei Nutzung des Fahrzeugs, und einer Befestigungsvorrichtung zum Befestigen des Windschilds an dem Fahrzeug, wobei die Befestigungsvorrichtung mindestens einen Verbindungsabschnitt und mindestens einen Rastabschnitt aufweist, die jeweils zum lösbaren Verbinden mit dem Fahrzeug ausgebildet sind.

Als Fahrzeuge im Rahmen dieser Beschreibung kommen grundsätzlich alle Land-, Wasser- und Luftfahrzeuge in Betracht, die eine entsprechende Windschildanordnung aufweisen. Bei Landfahrzeugen ist ein Einsatz neben Personenkraftwagen und Lastkraftwagen auch bei anderen motorgetriebenen Fahrzeugen möglich, wie beispielsweise Dreirädern oder Quads.

Gemäß einer bevorzugten Ausführungsform ist das Fahrzeug jedoch als sogenanntes Neigefahrzeug ausgebildet. Unter einem Neigefahrzeug werden unter anderem Motorräder oder motorradähnliche Kraftfahrzeuge, wie Motorroller, insbesondere neigefähige zwei-, drei- oder vierrädrige Motorroller, Scooter oder Dergleichen verstanden.

Die Windschildanordnung weist also die Befestigungsvorrichtung auf, welche zum Befestigen des Windschildes an dem Fahrzeug ausgebildet ist. Zum Beispiel kann die Befestigungsvorrichtung hierzu einerseits mit der Rückseite des Windschildes verbunden sein und andererseits (im verbauten Zustand) an dem Fahrzeug befestigt sein. Die Befestigungsvorrichtung umfasst erfindungsgemäß den einen oder die mehreren Verbindungsabschnitte sowie den einen oder die mehreren Rastabschnitte. Diese sind derart ausgebildet, dass die Verbindung mit dem Fahrzeug bei Bedarf lösbar ist. Auf diese Weise kann die Windschildanordnung besonders leicht vom Fahrzeug demontiert oder (erneut) montiert werden. Es müssen lediglich die mindestens eine Rastverbindung gelöst und der mindestens eine Verbindungabschnitt aus einem Eingriff mit dem Fahrzeug entnommen werden. Dies kann vorzugweise manuell ohne den Einsatz von zusätzlichem Werkzeug erfolgen.

Erfindungsgemäß ist der mindestens eine Verbindungsabschnitt zylindrisch, kegelförmig oder konisch ausgebildet und zum koaxialen Eingriff in mindestens eine fahrzeugseitige Aufnahme des Fahrzeugs vorgesehen. Der mindestens eine Verbindungsabschnitt ist jedenfalls aufgrund der beschriebenen geometrischen Ausgestaltungen als Einsteckabschnitt ausgebildet und kann somit zur Montage leicht in die jeweils zugeordnete fahrzeugseitige Aufnahme eingesteckt werden. Im Falle einer Demontage kann der Verbindungsabschnitt ebenso leicht aus der zugeordneten fahrzeugseitigen Aufnahme entnommen werden. Die jeweilige fahrzeugseitige Aufnahme ist vorzugsweise komplementär zu dem zugeordneten Verbindungsabschnitt ausgeformt. Auf diese Weise kann eine möglichst optimale Passform bereitgestellt werden, so dass der jeweilige Verbindungsabschnitt im verbauten Zustand möglichst passgenau und spielfrei (oder zumindest mit geringerem beziehungsweise reduziertem Spiel) am Fahrzeug befestigt werden kann.

Erfindungsgemäß kann eine Position des mindestens einen Verbindungsabschnitts in Richtung einer Hauptachse des Verbindungsabschnitts gegenüber dem Windschild verstellbar ausgebildet sein. Dies bedeutet, dass der jeweilige Verbindungsabschnitt einstellbar und somit in seiner Längsrichtung, der Hauptrichtung, verstellt beziehungsweise verschoben werden kann. Diese Ausgestaltung bietet die Möglichkeit im Bedarfsfall einen Toleranzausgleich vorzunehmen, um eine möglichst passgenaue Position des Verbindungabschnitts sicherzustellen.

Zum Beispiel kann die Einstellung des jeweiligen Verbindungsabschnitts mittels eines entsprechend an beziehungsweise in dem jeweiligen Verbindungsabschnitt vorgesehenen Gewindes erfolgen, so dass der Verbindungsabschnitt leicht durch eine entsprechende Drehbewegung verstellt werden kann. Eine Sicherung gegen ein Lösen des Verbindungsabschnitts kann vorzugsweise mittels Gegenmuttern und/oder Rändelschrauben erzielt werden.

Erfindungsgemäß ist der mindestens eine Rastabschnitt der Windschildanordnung derart ausgestaltet, dass der jeweilige Rastabschnitt eine Ausnehmung zum zumindest teilweisen Umgreifen eines fahrzeugseitigen Halteabschnitts umfasst. Der jeweilige Rastabschnitt kann beispielsweise mit der Ausnehmung auf den fahrzeugseitigen Halteabschnitt aufgesteckt werden, so dass die Ausnehmung den Halteabschnitt zumindest teilweise umgreift. Zum Beispiel kann der jeweilige Rastabschnitt hierzu einen im Wesentlichen U-förmigen Bereich aufweisen, der die Ausnehmung trägt, so dass der fahrzeugseitige Halteabschnitt von dieser durch die U-Form definierte Ausnehmung umgriffen wird.

Erfindungsgemäß umfasst der mindestens eine Rastabschnitt außerdem ein zu der Ausnehmung relativbewegliches Schließelement, das zwischen einer geöffneten Stellung und einer Schließstellung bewegbar ist, und in der Schließstellung eine Öffnung der Ausnehmung derart verschließt, dass der zugeordnete fahrzeugseitige Halteabschnitt in einem am Fahrzeug verbauten Zustand in der Ausnehmung gehalten werden kann.

Das Schließelement kann zum Beispiel ein Sperrriegel oder Sperrhebel sein, der jeweils zwischen den beiden Stellungen, der geöffneten Stellung und der Schließstellung, bewegt werden kann. In der Schließstellung wird der fahrzeugseitige Halteabschnitt (im verbauten Zustand) in der Ausnehmung gehalten. Dies bedeutet, dass der fahrzeugseitige Halteabschnitt zwischen einer die Ausnehmung begrenzenden Wandung des genannten Bereichs und dem Schließelement angeordnet und gehalten wird.

Ist das jeweilige Schließelement als Sperrhebel ausgebildet, so kann dessen Kinematik einen Totpunkt aufweisen. Dies ermöglicht, dass der Sperrhebel durch kurzes Überdrücken (des Totpunktes) gelöst oder verriegelt werden kann. Eine unbeabsichtigte Betätigung kann damit verhindert werden. Alternativ oder zusätzlich kann eine andere mechanische Sicherung vorgesehen werden, die ein Lösen des Sperrhebels verhindert. Beispielsweise kann ein Anschlag vorgesehen sein, der den Sperrhebel im eingebauten Zustand beziehungsweise in einer Einbaulage der Windschildanordnung gegen eine Betätigung blockiert. Zum Beispiel kann die mechanische Sicherung starr am zugehörigen Rastabschnitt befestigten oder in Form eines relativ zum Rastabschnitt drehbaren Anschlags ausgebildet sein, welche das Schließelement zumindest in der Einbaulage blockiert und somit gegen ein unbeabsichtigtes Öffnen sichert.

Das mindestens eine Schließelement kann in all seinen Ausführungsformen als alleinige Verriegelung vorgesehen werden, so dass die gesamte Windschildanordnung allein dadurch am Fahrzeug befestigt und gesichert werden kann. Dies ermöglicht eine leichte manuelle Montage ohne den Einsatz von zusätzlichen Werkzeug.

Für eine Demontage des Windschildes vom Fahrzeug wird beispielsweise das jeweilige Schließelement in die geöffnete Stellung überführt, so dass die Öffnung der Ausnehmung geöffnet wird. Der darin bereits angeordnete fahrzeugseitige Halteabschnitt kann anschließend aus der Ausnehmung entnommen werden.

Um eine vom Nutzer unerwünschte Demontage, beispielsweise einen Diebstahl, zu verhindern, kann das Schließelement blockiert werden. Zum Beispiel kann sowohl das Schließelement als auch der die Ausnehmung tragende Bereich des Rastabschnitts jeweils ein Loch aufweisen, wobei die beiden Löcher im geschlossenen Zustand des Schließelements miteinander fluchten. In diesem Fall kann beispielsweise ein Schloss, insbesondere ein Vorhängeschloss, in beide Löcher eingreifen und somit die gesamte Windschildanordnung sichern.

Erfindungsgemäß sind der mindestens eine Verbindungsabschnitt und der mindestens eine Rastabschnitt derart ausgerichtet, dass die Öffnung der Ausnehmung und die Hauptachse des Verbindungsabschnitts gemeinsam in eine Einschubrichtung weisen. Dies ermöglicht zum Beispiel, dass die gesamte Windschildanordnung in einer Richtung, der Einschubrichtung, an das Fahrzeug "angesteckt" werden kann. Hierbei wird der mindestens eine Verbindungsabschnitt in die jeweils zugeordnete fahrzeugseitige Aufnahme eingesteckt, und der mindestens eine Rastabschnitt umgreift mit seiner jeweiligen Ausnehmung den fahrzeugseitigen Halteabschnitt.

Alternativ kann die Windschildanordnung aber auch auf andere Weise am Fahrzeug befestigt werden. So kann die Windschildordnung in einem ersten Schritt zunächst mit dem mindestens einen Rastabschnitt mit dem fahrzeugseitigen Halteabschnitt verbunden werden, indem die Ausnehmung auf den fahrzeugseitigen Halteabschnitt aufgesteckt wird. Hierbei ist die Windschildanordnung vorzugsweise in einer in Fahrtrichtung nach vorn gekippten (temporären) Lage ausgerichtet. Anschließend wird das mindestens eine Schließelement in die Schließstellung bewegt, um ein Lösen des mindestens einen Rastabschnitts von dem fahrzeugseitigen Halteabschnitt zu verhindern. In einem nachfolgenden Schritt wird die gesamte Windschildanordnung entgegen der Fahrtrichtung in die gewünschte Position, die Einbaulage, gedreht. Hierbei dient der fahrzeugseitige Halteabschnitt als Drehachse. In der Einbaulage wird der mindestens eine Verbindungsabschnitt mit der zugeordneten fahrzeugseitigen Aufnahme verbunden. Zum Beispiel wird hierbei der mindestens eine Verbindungsabschnitt in seiner Längsrichtung mittels eines in beziehungsweise an dem Verbindungsabschnitt vorgesehenen Gewindes in Richtung der fahrzeugseitigen Aufnahme verstellt, um den gewünschten Eingriff herzustellen. Eine Sicherung gegen ein Lösen des Eingriffs kann mittels der beschriebenen Gegenmuttern und/oder Rändelschrauben erfolgen.

Zusätzlich kann eine mechanische Sicherung, beispielsweise in Form eines Anschlags, vorgesehen werden, welche das Schließelement in der Einbaulage blockiert und somit gegen ein unbeabsichtigtes Öffnen sichert.

Auch im Fall dieser alternativen Befestigungsweise können der mindestens eine Verbindungsabschnitt und der mindestens eine Rastabschnitt derart ausgerichtet sein, dass die Öffnung der Ausnehmung und die Hauptachse des Verbindungsabschnitts gemeinsam in eine gemeinsame Richtung weisen.

Gemäß einer Ausführungsform kann das jeweilige Schließelement derart geometrisch gestaltet sein, dass das Schließelement beim Anstecken an das Fahrzeug selbständig öffnet und die Ausnehmung zum Einführen des fahrzeugseitigen Halteabschnitts freigibt. Hierzu kann eine Außenkontur des Schließelements abgeschrägt und/oder abgerundet ausgeführt werden, so dass das Schließelement bei Kontakt mit dem Halteabschnitt seitlich ausweicht und damit ein Öffnen des Schließelements bewirkt.

Des Weiteren wird ein Fahrzeug mit Windschildanordnung zum (zumindest teilweisen) Abweisen eines Fahrtwindes bei Nutzung des Fahrzeugs bereitgestellt, wobei die Windschildanordnung gemäß dieser Beschreibung ausgebildet ist.

Hierbei kann die mindestens eine fahrzeugseitige Aufnahme zum koaxialen Eingriff des mindestens einen Verbindungsabschnitts an einem oberen Ende einer Vorderradgabel des Fahrzeugs, insbesondere an einem oberen Ende eines Gabelbeins, eines Standrohrs oder eines Tauchrohrs der Vorderradgabel, ausgebildet sein. Optional kann die Aufnahme in den dortigen Verschlusskappen oder Gabelstopfen integriert sein. Alternativ kann die jeweilige fahrzeugseitige Aufnahme an beziehungsweise in einer oberen oder unteren Gabelbrücke vorgesehen sein.

Außerdem kann, wie voranstehend beschrieben, die mindestens eine fahrzeugseitige Aufnahme komplementär zu dem mindestens einen Verbindungsabschnitt ausgeformt sein.

Gemäß einer bevorzugten Ausführungsform kann der mindestens eine fahrzeugseitige Halteabschnitt mindestens einen im Wesentlichen waagrecht ausgerichteten Fortsatz umfassen, der in dem mindestens einen Rastabschnitt gehalten ist.

Die beschriebene Windschildanordnung ermöglicht es also zusammenfassend, dass die Befestigungsvorrichtung besonders einfach von oben auf das Fahrzeug aufgesteckt werden kann. Mit Hilfe der Schließelemente wird eine simple Betätigung ohne zusätzliches Werkzeug ermöglicht und dadurch die gesamte Windschildanordnung am Fahrzeug befestigt und zuverlässig gesichert.

Die Erfindung wird nachfolgend anhand eines Ausführungsbeispiels unter Bezugnahme auf die Zeichnungen näher erläutert. Es zeigen:
- Fig. 1:: eine Windschildanordnung gemäß der Beschreibung,
- Fig. 2:: eine Vorderradgabel eines Fahrzeugs zur Aufnahme der Windschildanordnung gemäß Fig. 1,
- Fig. 3:: ein Fahrzeug mit der Windschildanordnung gemäß Fig.1 und
- Fig. 4:: eine alternative Montageabfolge für die Windschildanordnung.

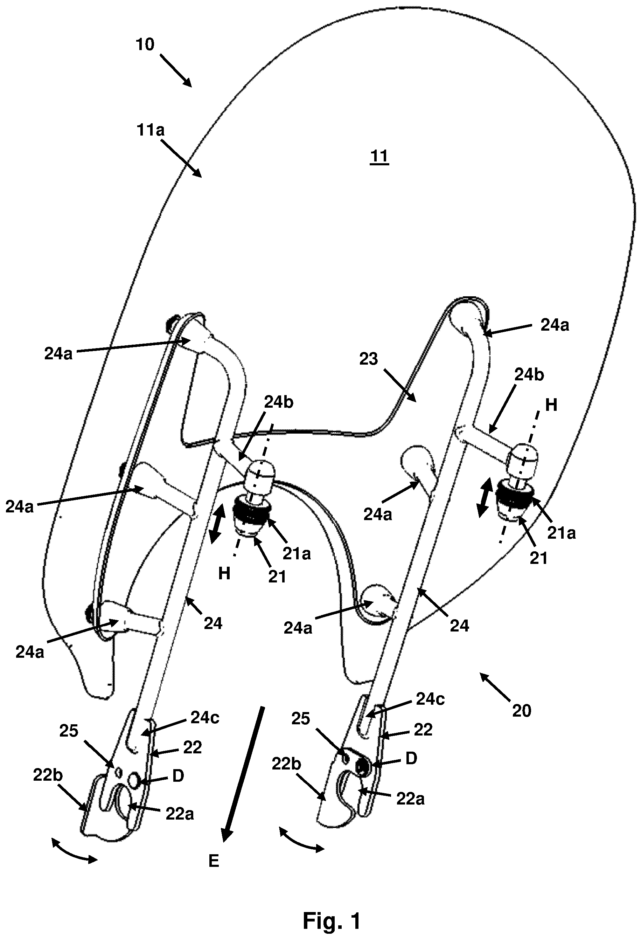

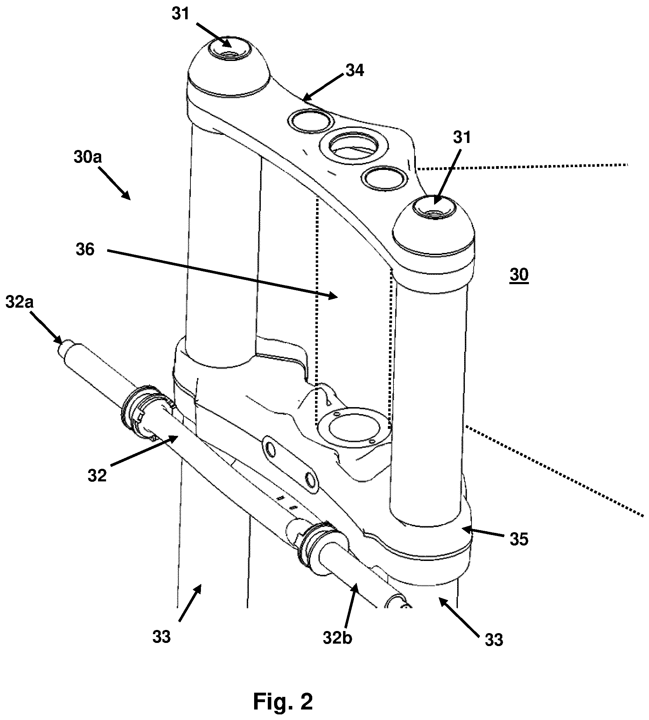

Fig. 1 zeigt eine Windschildanordnung 10 zur Befestigung an einem beispielhaft als Motorrad ausgeführten Fahrzeug 30, welches in Fig. 2 lediglich teilweise und schematisch angedeutet ist. Die Windschildanordnung 10 umfasst ein Windschild 11, welches zum zumindest teilweisen Abweisen eines Fahrtwindes bei der Nutzung des Motorrads 30 ausgebildet ist. Lediglich beispielhaft ist das Windschild 11 als transparente Scheibe dargestellt. Selbstverständlich kann das Windschild 11 lediglich abschnittsweise transparent, bei Bedarf aber auch vollständig intransparent ausgebildet sein. Auf einer dem Fahrer zugewandten Rückseite 11a des Windschildes 11 ist eine Befestigungsvorrichtung 20 vorgesehen, die zum Befestigen des Windschilds 11 an dem Fahrzeug 30 ausgebildet ist. Hierzu weist die Befestigungsvorrichtung 20 zwei Verbindungsabschnitte 21 und außerdem zwei Rastabschnitte 22 auf, die jeweils zum lösbaren Verbinden mit dem (restlichen) Fahrzeug 30 ausgebildet sind.

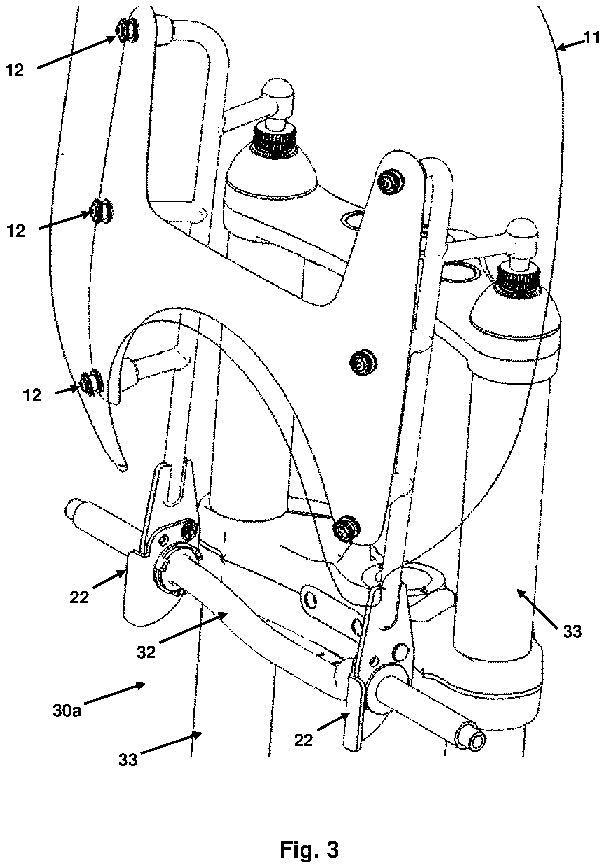

In der dargestellten Ausführungsform umfasst die Befestigungsvorrichtung 20 außerdem eine flächige Windschildaufnahme 23 zur unmittelbaren Verbindung der Befestigungsvorrichtung 20 mit dem Windschild 11. Beispielsweise kann diese unmittelbare Verbindung mittels Verbindungsmitteln 12 (Fig. 3), wie Schrauben oder Nieten, oder über eine stoffschlüssige Verbindung, wie eine Verklebung, erfolgen. Auf einer dem Windschild 11 abgewandten Seite der Windschildaufnahme 23 sind zwei Tragstrukturen 24 angebracht, die mit jeweils drei Armfortsätzen 24a mit der Windschildaufnahme 23 verbunden sind. Es versteht sich, dass statt der drei Armfortsätze 24a eine andere, beliebige Anzahl an Fortsätzen oder eine andersförmige Verbindung mit der Windschildaufnahme 23 vorgesehen werden kann.

Jeweils ein weiterer Tragarm 24b weist in die entgegengesetzte Richtung, also von dem Windschild 11 weg, und ist an seinem äußeren (abgewinkelten) Ende jeweils mit einem der beiden Verbindungsabschnitte 21 der Befestigungsvorrichtung 20 verbunden.

An einem jeweiligen unteren Ende 24c der beiden Tragstrukturen 24 ist der jeweilige Rastabschnitt 22 vorgesehen.

Wie insbesondere aus Fig. 1 ersichtlich ist, sind die beiden Verbindungsabschnitte 21 in der dargestellten Ausführungsform jeweils konisch ausgebildet und somit zum koaxialen Eingriff in jeweils eine fahrzeugseitige Aufnahme 31 des Fahrzeugs 30 (dargestellt in Fig. 2) vorgesehen. Alternativ können die Verbindungsabschnitte 21 aber auch zylindrisch oder kegelförmig ausgebildet sein (nicht dargestellt).

Jeder der beiden Verbindungsabschnitte 21 ist derart ausgebildet, dass eine Position des Verbindungabschnitts 21 in Richtung einer Hauptachse H des Verbindungsabschnitts 21 gegenüber dem Windschild 11 verstellbar ausgebildet ist. Die Verstellbarkeit wird beispielsweise mittels eines an beziehungsweise in dem Verbindungsabschnitt 21 vorgesehenen Gewindes erzielt, so dass eine Verstellung des jeweiligen Verbindungsabschnitts 21 in seiner Längsrichtung, koaxial zur Hauptachse H leicht durch eine Drehbewegung ermöglicht wird.

Eine Sicherung gegen ein Lösen des Verbindungsabschnitts 21 kann vorzugsweise mittels Rändelschrauben 21a oder Gegenmuttern erzielt werden.

Die beiden Rastabschnitte 22 sind derart ausgebildet, dass jeder Rastabschnitt 22 eine Ausnehmung 22a zum zumindest teilweisen Umgreifen eines fahrzeugseitigen Halteabschnitts 32 (dargestellt in Fig. 2 und 3) umfasst. Die jeweilige Ausnehmung 22a ist derart ausgerichtet, dass der Rastabschnitt 22 mit dieser auf den fahrzeugseitigen Halteabschnitt 32 aufgesteckt werden kann. In der dargestellten Ausführungsform weist der Rastabschnitt 22 hierzu einen die Ausnehmung 22 tragenden Bereich auf, der im Wesentlichen U-förmig ausgebildet ist.

Zusätzlich umfasst jeder der beiden Rastabschnitte 22 außerdem ein zu der Ausnehmung 22a relativbewegliches Schließelement 22b, das zwischen einer geöffneten Stellung und einer Schließstellung bewegbar ist (dargestellt ist die Schließstellung), und in der Schließstellung eine Öffnung der Ausnehmung 22a derart verschließt, dass der fahrzeugseitige Halteabschnitt 32 in einem am Fahrzeug verbauten Zustand in der Ausnehmung 22a gehalten werden kann.

Das Schließelement 22b ist hierzu als Sperrhebel ausgebildet, der hakenförmig ausgebildet ist und somit den fahrzeugseitigen Halteabschnitt 32 u-förmig umgreifen und halten kann. Die hakenförmige Ausgestaltung des jeweiligen Schließelements 22b ermöglicht es, dass das Schließelement 22b beim Anstecken an den fahrzeugseitigen Halteabschnitt 32 selbständig öffnet und die Ausnehmung 22a zum Einführen des fahrzeugseitigen Halteabschnitts 32 freigibt. Dies wird durch eine im Wesentlichen abgeschrägte und/oder abgerundete Außenkontur des Schließelements 22b erzielt, die bei Kontakt mit dem fahrzeugseitigen Halteabschnitt 32 ein seitliches Ausweichen um eine Drehachse D und ein damit bewirktes Öffnen des Schließelements 22b bewirkt. Über eine Rückstellfeder kann das Schließelement 22b anschließend wieder in die geschlossene Stellung rückgeführt werden.

Zur Verhinderung einer unerwünschten Demontage, beispielsweise zur Vermeidung eines Diebstahls, kann das Schließelement 22b blockiert werden. Hierzu weisen sowohl das Schließelement 22b als auch der restliche Rastabschnitt 22 (also der die Ausnehmung 22a tragende Bereich) jeweils ein Loch 25 auf, wobei die beiden Löcher 25 jedes Rastabschnitts 22 im geschlossenen Zustand des Schließelements miteinander fluchten. So kann beispielsweise ein Schloss eingesetzt werden, welches in beide Löcher 25 eingreift und die gesamte Windschildanordnung 10 am Fahrzeug 30 sichert.

Vorteilhaft wirkt sich aus, dass in der dargestellten Ausführungsform die Öffnung der Ausnehmung 22a und die Hauptachse H des jeweiligen Verbindungsabschnitts 21 gemeinsam in Richtung einer Einschubrichtung E weisen. Die Öffnung weist also in dieselbe Richtung wie die Hauptachse H und die Einschubrichtung E.

Dies ermöglicht es, die beschriebene Windschildanordnung 10 von oben an die in Fig. 2 dargestellte Vorderradaufhängung 30a des Motorrades 30 anzustecken. Selbstverständlich kann das Fahrzeug 30 auch ein anderes Fahrzeug im Sinne dieser Beschreibung sein.

Die Vorderradaufhängung 30a des dargestellten Motorrades 30 ist als Vorderradgabel dargestellt und umfasst zwei Gabelbeine 33, die üblicherweise jeweils ein Tauchrohr und ein hierzu relativbewegliches Standrohr aufweisen. Die beiden Gabelbeine 33 sind über zwei Gabelbrücken 34,35 beanstandet zueinander angeordnet. Die Gabelbrücken 34,35 selbst sind zusätzlich über ein Steuerrohr verbunden, welches in einem (lediglich schematisch angedeuteten) Lenkkopf 36 drehbeweglich zu einer Fahrzeugstruktur, hier dem Motorradrahmen, gehalten ist.

In der dargestellten Ausführungsform sind die beiden fahrzeugseitigen Aufnahmen 31 zum koaxialen Eingriff des jeweiligen Verbindungsabschnitts 21 an einem oberen Ende der Vorderradaufhängung 30a, nämlich an einem jeweiligen oberen Ende der beiden Gabelbeine 33 ausgebildet. Dort ist optional die Aufnahme beispielsweise in den Verschlusskappen oder Gabelstopfen (sofern vorhanden) möglich. Das entsprechende obere Ende kann beispielsweise von dem Standrohr (wie dargestellt) bereitgestellt werden, ebenso ist aber auch eine umgekehrte Anordnung der Gabelbeine 33 möglich, bei der das Standrohr das obere Ende des jeweiligen Gabelbeins 33 bereitstellt.

Alternativ und daher nicht dargestellt, kann die jeweilige fahrzeugseitige Aufnahme 31 beispielsweise an der oberen 34 oder unteren Gabelbrücke 35 ausgebildet sein.

In jedem Fall sind die beiden fahrzeugseitigen Aufnahmen 31 komplementär zu dem jeweils zugeordneten Verbindungsabschnitt 21 ausgeformt und weisen eine entsprechend konische Form auf.

Zusätzlich ist der fahrzeugseitige Halteabschnitt 32 vorgesehen, der beispielhaft mit der unteren Gabelbrücke 35 verbunden ist. Alternativ wäre aber auch eine Verbindung mit der oberen Gabelbrücke 34 oder einem oder beiden Gabelbeinen 33 möglich.

Der fahrzeugseitige Halteabschnitt 32 ist bügelförmig ausgebildet und umfasst zwei im Wesentlichen waagrecht ausgerichtete Fortsätze 32a, 32b, die von seinen beiden Enden gebildet werden. Diese sind im verbauten Zustand gemäß Fig. 3 in jeweils einem der beiden Rastabschnitte 22 gehalten.

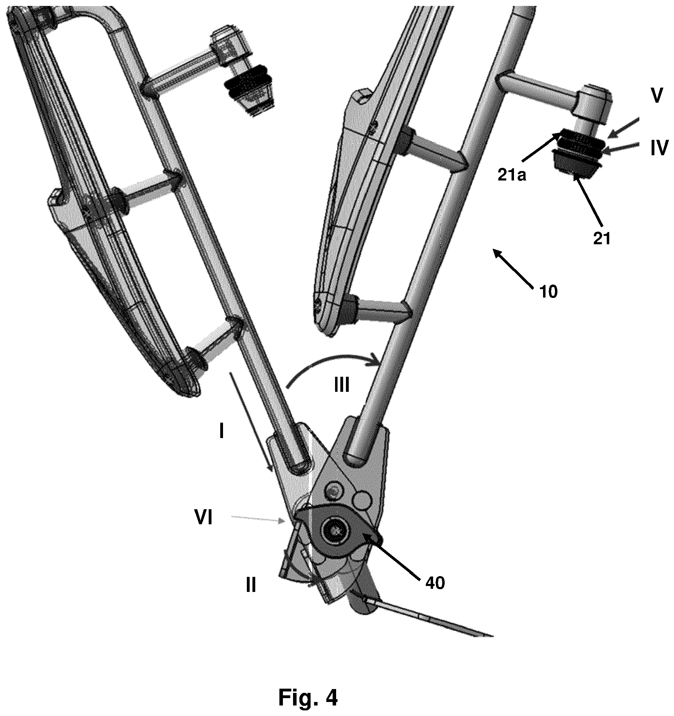

Fig. 4 zeigt eine alternative Montageabfolge zur Einsteckbewegung E für die Windschildanordnung 10 aus den Fig. 1 bis 3. So kann die Windschildordnung 10 in einem ersten Schritt I zunächst mit den beiden Rastabschnitten 22 (aufgrund der seitlichen Ansicht ist lediglich ein Rastabschnitt 22 sichtbar) mit dem fahrzeugseitigen Halteabschnitt 32 verbunden werden, indem die Ausnehmungen 22a auf den fahrzeugseitigen Halteabschnitt 32 aufgesteckt werden. Hierbei ist die Windschildanordnung 10 in einer in Fahrtrichtung nach vorn gekippten (temporären) Lage ausgerichtet. Anschließend wird das jeweilige Schließelement 22b in die Schließstellung bewegt (Schritt II), um ein Lösen der Rastabschnitte 22 von dem fahrzeugseitigen Halteabschnitt 32 zu verhindern. In einem nachfolgenden Schritt III wird die gesamte Windschildanordnung 10 entgegen der Fahrtrichtung in die gewünschte Position, die Einbaulage, gedreht. Hierbei dient der fahrzeugseitige Halteabschnitt 32 als Drehachse. In der Einbaulage werden die beiden Verbindungsabschnitte 21 mit der jeweils zugeordneten fahrzeugseitigen Aufnahme 31 verbunden. Die Verbindungsabschnitte 21 werden in ihrer Längsrichtung in Richtung der fahrzeugseitigen Aufnahme 31 verstellt (Schritt IV), um den gewünschten Eingriff herzustellen. Zum Beispiel kann die Einstellung beziehungsweise Verstellung des jeweiligen Verbindungsabschnitts 21 mittels des beschriebenen Gewindes erfolgen. Eine Sicherung gegen ein Lösen des Eingriffs kann mit den Rändelschrauben 21 bereitgestellt werden (Schritt V). Zusätzlich kann eine mechanische Sicherung 40, beispielsweise in Form eines starr am Rastabschnitt 22 befestigten oder in Form eines relativ zum Rastabschnitt 22 drehbaren Anschlags 40, vorgesehen werden, welche das Schließelement 22b in der dargestellten Einbaulage blockiert und somit gegen ein unbeabsichtigtes Öffnen sichert.

## Patentansprüche

1. Windschildanordnung (10) zur Befestigung an einem Fahrzeug (30), insbesondere einem Neigefahrzeug, mit einem Windschild (11) zum zumindest teilweisen Abweisen eines Fahrtwindes bei Nutzung des Fahrzeugs (30), und einer Befestigungsvorrichtung (20) zum Befestigen des Windschilds (11) an dem Fahrzeug (30), wobei die Befestigungsvorrichtung (20) mindestens einen Verbindungsabschnitt (21) und mindestens einen Rastabschnitt (22) aufweist, die jeweils zum lösbaren Verbinden mit dem Fahrzeug (30) ausgebildet sind,
wobei der mindestens eine Rastabschnitt (22) eine Ausnehmung (22a) zum zumindest teilweisen Umgreifen eines fahrzeugseitigen Halteabschnitts (32) umfasst, und wobei der mindestens eine Rastabschnitt (22) außerdem ein zu der Ausnehmung (22a) relativbewegliches Schließelement (22b) umfasst, das zwischen einer geöffneten Stellung und einer Schließstellung bewegbar ist, und in der Schließstellung eine Öffnung der Ausnehmung (22a) derart verschließt, dass der fahrzeugseitige Halteabschnitt (32) in einem am Fahrzeug (30) verbauten Zustand in der Ausnehmung (22a) gehalten werden kann,
wobei der mindestens eine Verbindungsabschnitt (21) zylindrisch, kegelförmig oder konisch ausgebildet und zum koaxialen Eingriff in mindestens eine fahrzeugseitige Aufnahme (31) des Fahrzeugs (30) ausgestaltet ist,
wobei eine Position des Verbindungabschnitts (21) in Richtung einer Hauptachse (H) des Verbindungsabschnitts (21) gegenüber dem Windschild (11) verstellbar ausgebildet ist,
**dadurch gekennzeichnet, dass** die Öffnung der Ausnehmung (22a) und die Hauptachse (H) des Verbindungsabschnitts (21) gemeinsam in eine Richtung, insbesondere in Richtung einer Einschubrichtung (E), weisen.

2. Fahrzeug (30) mit einer Windschildanordnung (10) zum zumindest teilweisen Abweisen eines Fahrtwindes bei Nutzung des Fahrzeugs (30), **dadurch gekennzeichnet, dass** die Windschildanordnung (10) nach Anspruch 1 ausgebildet ist.

3. Fahrzeug (30) nach Anspruch 2, **dadurch gekennzeichnet, dass** die mindestens eine fahrzeugseitige Aufnahme (31) zum koaxialen Eingriff des mindestens einen Verbindungsabschnitts (21) an einem oberen Ende einer Vorderradgabel (30a) des Fahrzeugs (30), insbesondere an einem oberen Ende eines Gabelbeins (33), eines Standrohrs oder eines Tauchrohrs der Vorderradgabel (30a), ausgebildet ist.

4. Fahrzeug (30) nach Anspruch 2 oder 3, **dadurch gekennzeichnet, dass** die mindestens eine fahrzeugseitige Aufnahme (31) komplementär zu dem jeweiligen Verbindungsabschnitt (21) ausgeformt ist.

5. Fahrzeug (30) nach mindestens einem der Ansprüche 2 bis 4, **dadurch gekennzeichnet, dass** der mindestens eine fahrzeugseitige Halteabschnitt (32) mindestens einen im Wesentlichen waagrecht ausgerichteten Fortsatz (32a,32b) umfasst, der in dem mindestens einen Rastabschnitt (22) gehalten ist.

## Claims

1. Windshield arrangement (10) for attachment to a vehicle (30), in particular a leaning vehicle, with a windshield (11) for at least partially deflecting a headwind during use of the vehicle (30), and a fastening device (20) for fastening the windshield (11) to the vehicle (30), wherein the fastening device (20) has at least one connecting portion (21) and at least one latching portion (22), which are each designed for releasable connection to the vehicle (30),
wherein the at least one latching portion (22) comprises a recess (22a) for at least partially encompassing a vehicle-side retaining portion (32), and
wherein the at least one latching portion (22) further comprises a closure element (22b) movable relative to the recess (22a), which is movable between an open position and a closed position, and in the closed position closes an opening of the recess (22a) such that the vehicle-side retaining portion (32) can be held in the recess (22a) in a state installed on the vehicle (30),
wherein the at least one connecting portion (21) is formed cylindrically, conically or conically and is configured for coaxial engagement in at least one vehicle-side receptacle (31) of the vehicle (30),
wherein a position of the connecting portion (21) in the direction of a main axis (H) of the connecting portion (21) is formed adjustable relative to the windshield (11), **characterized in that** the opening of the recess (22a) and the main axis (H) of the connecting portion (21) jointly point in one direction, in particular in the direction of an insertion direction (E).

2. Vehicle (30) with a windshield arrangement (10) for at least partially deflecting a headwind during use of the vehicle (30), **characterized in that** the windshield arrangement (10) is formed according to claim 1.

3. Vehicle (30) according to claim 2, **characterized in that** the at least one vehicle-side receptacle (31) for coaxial engagement of the at least one connecting portion (21) is formed at an upper end of a front wheel fork (30a) of the vehicle (30), in particular at an upper end of a fork leg (33), a stanchion tube or a slider tube of the front wheel fork (30a).

4. Vehicle (30) according to claim 2 or 3, **characterized in that** the at least one vehicle-side receptacle (31) is formed complementary to the respective connecting portion (21).

5. Vehicle (30) according to at least one of claims 2 to 4, **characterized in that** the at least one vehicle-side retaining portion (32) comprises at least one substantially horizontally oriented extension (32a,32b), which is held in the at least one latching portion (22).

## Revendications

1. Dispositif de pare-brise (10) pour fixation à un véhicule (30), en particulier un véhicule inclinable, avec un pare-brise (11) pour dévier au moins partiellement un vent relatif lors de l'utilisation du véhicule (30), et un dispositif de fixation (20) pour fixer le pare-brise (11) au véhicule (30), le dispositif de fixation (20) présentant au moins une section de liaison (21) et au moins une section d'encliquetage (22), qui sont chacune conçues pour une liaison détachable avec le véhicule (30),
la au moins une section d'encliquetage (22) comprenant un évidement (22a) pour entourer au moins partiellement une section de retenue côté véhicule (32), et la au moins une section d'encliquetage (22) comprenant en outre un élément de fermeture (22b) mobile relativement à l'évidement (22a), qui est mobile entre une position ouverte et une position de fermeture, et en position de fermeture ferme une ouverture de l'évidement (22a) de telle sorte que la section de retenue côté véhicule (32) puisse être maintenue dans l'évidement (22a) dans un état monté sur le véhicule (30),
la au moins une section de liaison (21) étant formée de manière cylindrique, conique ou conique et étant conçue pour un engagement coaxial dans au moins un logement côté véhicule (31) du véhicule (30),
une position de la section de liaison (21) dans la direction d'un axe principal (H) de la section de liaison (21) étant formée de manière réglable par rapport au pare-brise (11),
**caractérisé en ce que** l'ouverture de l'évidement (22a) et l'axe principal (H) de la section de liaison (21) pointent conjointement dans une direction, en particulier dans la direction d'une direction d'insertion (E).

2. Véhicule (30) avec un dispositif de pare-brise (10) pour dévier au moins partiellement un vent relatif lors de l'utilisation du véhicule (30), **caractérisé en ce que** le dispositif de pare-brise (10) est formé selon la revendication 1.

3. Véhicule (30) selon la revendication 2, **caractérisé en ce que** le au moins un logement côté véhicule (31) pour l'engagement coaxial de la au moins une section de liaison (21) est formé à une extrémité supérieure d'une fourche de roue avant (30a) du véhicule (30), en particulier à une extrémité supérieure d'un bras de fourche (33), d'un tube plongeur ou d'un tube coulissant de la fourche de roue avant (30a).

4. Véhicule (30) selon la revendication 2 ou 3, **caractérisé en ce que** le au moins un logement côté véhicule (31) est formé de manière complémentaire à la section de liaison respective (21).

5. Véhicule (30) selon au moins l'une des revendications 2 à 4, **caractérisé en ce que** la au moins une section de retenue côté véhicule (32) comprend au moins un prolongement (32a,32b) orienté sensiblement horizontalement, qui est maintenu dans la au moins une section d'encliquetage (22).
